(19) Europäisches Patentamt
European Patent Office
Office européen des brevets

(11) **EP 4 211 628 B1**

(12) **EUROPEAN PATENT SPECIFICATION**

(45) Date of publication and mention
of the grant of the patent:
**18.06.2025 Bulletin 2025/25**

(21) Application number: **21778242.4**

(22) Date of filing: **03.09.2021**

(51) International Patent Classification (IPC):
*G06Q 10/02* (2012.01)     *G06Q 10/04* (2023.01)
*G06Q 10/06* (2023.01)     *G06Q 10/08* (2024.01)
*G06Q 30/02* (2023.01)     *G06Q 50/14* (2012.01)

(52) Cooperative Patent Classification (CPC):
**G06Q 10/025; G06Q 10/047; G06Q 30/0202;
G06Q 30/0281; G06Q 50/14**

(86) International application number:
**PCT/IT2021/050271**

(87) International publication number:
**WO 2022/054115 (17.03.2022 Gazette 2022/11)**

(54) **PROCESS AND APPARATUS FOR ORGANIZING DIGITAL AND CUSTOMIZED TOURIST ITINERARIES**

VERFAHREN UND VORRICHTUNG ZUR ORGANISATION DIGITALER UND ANGEPASSTER REISEROUTEN

PROCÉDÉ ET APPAREIL POUR ORGANISER DES ITINÉRAIRES TOURISTIQUES NUMÉRIQUES ET PERSONNALISÉS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.09.2020 IT 202000021580**

(43) Date of publication of application:
**19.07.2023 Bulletin 2023/29**

(73) Proprietor: **Garavelli, Giorgio
10141 Torino (IT)**

(72) Inventor: **Garavelli, Giorgio
10141 Torino (IT)**

(74) Representative: **Garavelli, Paolo
A.BRE.MAR. S.R.L.
Consulenza in Proprietà Industriale
Via Servais 27
10146 Torino (IT)**

(56) References cited:
**US-A1- 2007 185 744     US-B2- 7 212 983**

**Description**

The present invention refers to a process and an apparatus for organizing digital and customized tourist itineraries, which accompanies people to discover new cultures through the story of the traditions, art and history of a city or a place of tourist interest.

Currently, people often base the organization of a cultural trip on online (non-customized) advice and guides. The process takes time and energy when a person has to search for what is best for him, without knowing the places and activities at his destination.

The main problems encountered are:

1) time lost in research: there are many things to do and visit in a city. To organize a visit, a person must see them all, read guides and look for "things to do";

2) difficulty in finding organized and complete contents of attractions: people want to understand local culture and traditions. It is difficult to find relevant content for each place, especially for smaller or less famous places;

3) fear of missing something important: most people can only spend a limited time getting information about the destination. It is almost impossible to consider all tours and all places to visit, and therefore people are afraid of missing some tourist points of interest.

US 2007/185744 A1 relates to systems for planning and executing travel. US 7 212 983 B2 refers generally to a system for creating a personalized itinerary.

Object of the present invention is solving the aforementioned prior art problems, providing a process and an apparatus for organizing flexible and customized tourist itineraries, which provide the following characteristics:

1) automated tourism with a digital guide: possibility of organizing an itinerary that is flexible (it can start and end at any time and from anywhere you want) and customized (based on personal interests, which can change at any time);

2) integrated quality content: each mapped location also has a page of content presenting: historical and artistic relevance, interventions during its history, traditional legends and curiosities, and all tourist information (opening hours, estimated time of visit, admission ticket price) ;

3) mapping of all the places of interest in the city: the database has all the cultural references of a city, from the "top" and most famous attraction, to "hidden gems". There is no need to actively search for places - you are notified every time you come across them.

The advantages of the inventive process and apparatus are:

a) customization: an infinite number of possible itineraries based on your interests and which can be modified at any time

b) database: all positions are mapped and the contents are written by academics and specialists

c) ease of use: there is no need to consult hundreds of websites or guides: everything is in one place and the Application sends notifications relating to the place that the user has encountered

d) completely focused on tourist services in the destination: costs, time and energy are saved by focusing on services for the traveler in the destination

e) incentives for suppliers: tour guides will have the possibility to create their own digital tours and reach the maximum capacity of their tours by aggregating other people during the tour itself

f) design: a simple design and attractive descriptions can break the barrier between cultural and artistic content and the public.

The above and other objects and advantages of the invention, as will appear from the following description, are achieved with a process and an apparatus for organizing digital and customized tourist itineraries such as those described in the respective independent claims. Preferred embodiments and non-trivial variants of the present invention form the subject of the dependent claims.

It is understood that all the attached claims form an integral part of the present description.

The present invention will be better described by some preferred embodiments, provided by way of non-limiting example, with reference to the attached drawings, in which:

- Figure 1 is a schematic view of an implementation of the apparatus according to the present invention; and

Figures 2 to 7 are schematic views of screens and functions of the process according to the present invention.

With reference to the Figures, a preferred embodiment of the present invention is illustrated and described. It will be immediately obvious that innumerable variations and modifications (for example relating to shape, dimensions, various colors and parts with equivalent functionality) can be made to what is described without departing from the scope of the invention as appears from the attached claims.

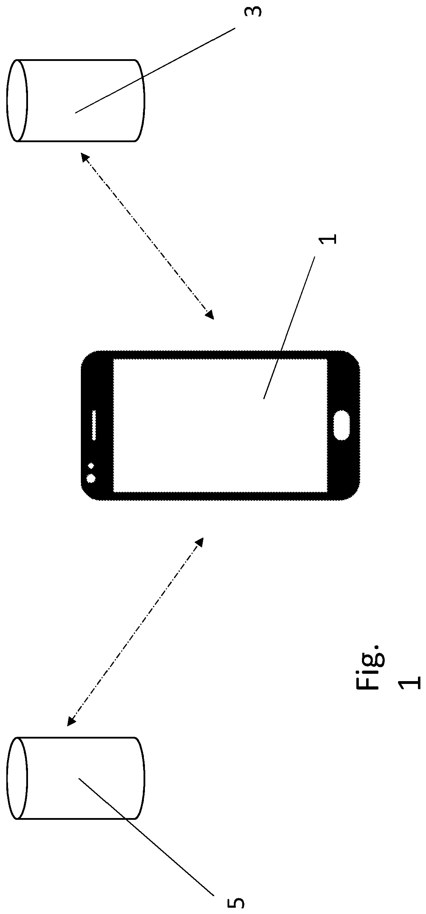

With reference to Figure 1, an exemplary and absolutely non-limiting embodiment of the environment in which the process of the present invention operates is illustrated. This environment comprises a processing and management apparatus 1 (preferably a smartphone, but which could be any processing apparatus of the mobile or fixed type, computer, tablet, laptop, palmtop, etc.) operatively connected to at least a first database 3 containing geographic and tourist data of places of interest, and at least a second database 5 containing user data. It is obvious that these databases 3, 5 could be incorporated into a single database, or divided into additional databases, both physical, and located on the cloud or on other media.

Database 3 includes a list of places and artistic works identified by their title and geographical location (address). Data are divided into two sections; in the first, the places are divided into first-level and second-level types which reveal their identifying characteristics. These types are:

◦Architecture

1. Entertainment buildings
2. Public building
3. Architectural element
4. Gallery
5. Place of worship
6. Museum
7. Palace
8. Porch
9. Dynastic residence

◦ Pictorial work
◦ Sculptural work

1. Fountain
2. Installation
3. Monument
4. Relief
5. Statuary

◦ Archaeological Site
◦ Park/garden
◦ Urban planning

1. Square
2. Street

◦ Special

These characterizations are represented on the map by vector pins of different colors (identification by type of first level) and symbols/icons (by type of second level).

For each place a subtitle is inserted with an explanatory function.

For some places, the opening hours, the cost of the ticket (if any) and an estimated visit time are also entered.

Each place has a content sheet organized as follows:

1. a section of the historical-artistic description of the place, consisting of a part of the text and one or more photographs of the place itself;
2. a section describing the legends or curiosities relating to the place, consisting of a part of the text and a photograph for each legend or curiosity described in the text;
3. a section of restoration interventions, modifications or reconstruction of the place or work that took place during its history and organized according to: type of intervention, date of intervention and artists involved;
4. an in-depth section (understood as works that are part of the place but that are independent from the structure of the place itself), consisting of the title of the work, the date of creation, the name of the artist, a section of text of description of the work and a photo of the work described.

The "content" section includes data on the structure of the place or work. The data is sorted in a Table where each row (record) corresponds to the place or work, and each column an attribute. The attributes are identified by 5 macro categories which are in turn divided into subcategories.

Below is the composition of the attributes of the Table:

1. Historical period and territorial areas,

    1.1 Ancient Age;
    1.2 Medieval Age;
    1.3 Modern Age;
    1.4 Contemporary Age;

2. Legends and curiosities - historical period,

    2.1 "Not applicable";
    2.2 Ancient Age;
    2.3 Medieval Age;
    2.4 Modern Age;
    2.5 Contemporary Age;

3. Form of art,

    3.1 Painting;
    3.2 Sculpture/monument;
    3.3 Architecture,

        3.3.1 Church-Palace-Building;
        3.3.2 Museum;
        3.3.3 Garden-park;
        3.3.4 Urban planning;

    3.4 Minor art;

        3.4.1 Generic;
        3.4.2 Mosaic;
        3.4.3 Textile;
        3.4.4 Porcelain;
        3.4.5 Jewelry;
        3.4.6 Cabinet making;

    3.5 Drawing and engraving;
    3.6 Design;
    3.7 Literature;
    3.8 Music;
    3.9 Theater;
    3.10 Cinema;
    3.11 Photography;
    3.12 Documentation;

4. Subject and pictorial genres,

    4.1 Not applicable;

    4.2 Religious;
    4.3 History;
    4.4 Mythological;

4.5 Allegorical;
4.6 Portrait;
4.7 Landscape;
4.8 Genre painting;
4.9 Still life;

5. Values,

5.1 Functional;
5.2 Symbolic;
5.3 Sacred;
5.4 Social;
5.5 Political;
5.6 Celebratory;
5.7 Personal;

In the table there are 3 other columns whose attributes are not directly attributable to the structure of the place or work but identify qualities attributable to the search for the place and its value in the external context. The three attributes are:

1. Artists involved;
2. "Photogenicity";
3. Panoramic view;

The intersection value between entities (rows) and attributes (columns) can be a percentage or a null value (equivalent to zero). The magnitude of the percentage value is attributable to each subgroup with reference to the macro-category to which it belongs.
The sum of the percentage values of the subcategories must be equal to 100% of the macro-category to which they are included. Each macro-category must have a total sum equal to 100%.
An example:

| | Historic period and territorial purview | | | | Legends and curiosities - historical period | | | | |
|---|---|---|---|---|---|---|---|---|---|
| | Ancient Age | Medieval Age | Modern Age | Contemporary Age | N/A | Ancient Age | Medieval Age | Modern Age | Contemporary Age |
| Sample place | 0.10 | | 0.40 | 0.50 | | 0.30 | | | 0.70 |

As regards the three "external attributes", the values are represented as follows:

◦ Artists involved: name and surname of the artist/artists;
◦ "Photogenicity": percentage value, expression of the level of "photographic interest" of the tourist;
◦ Panoramic view: check box to indicate the presence (in the immediate surroundings or accessible via the place) of an area with a view of the surrounding landscape.

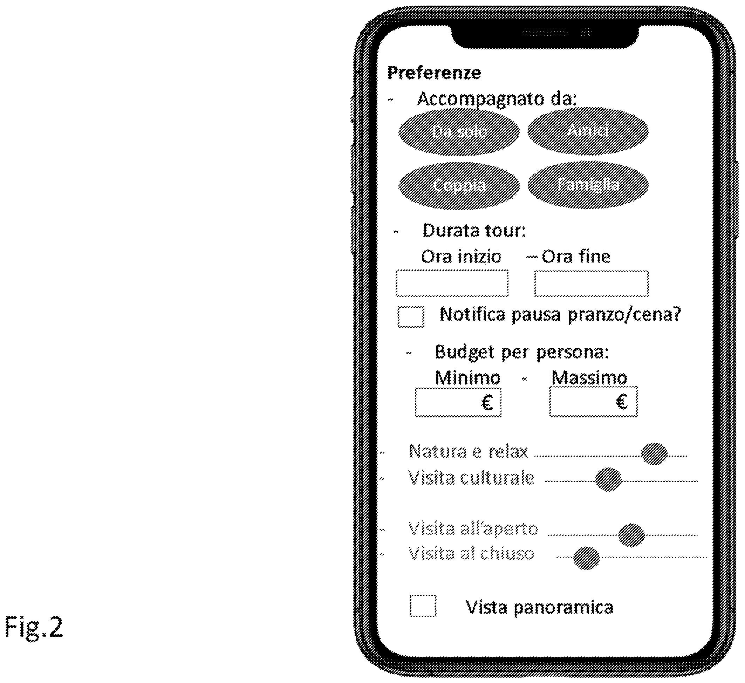

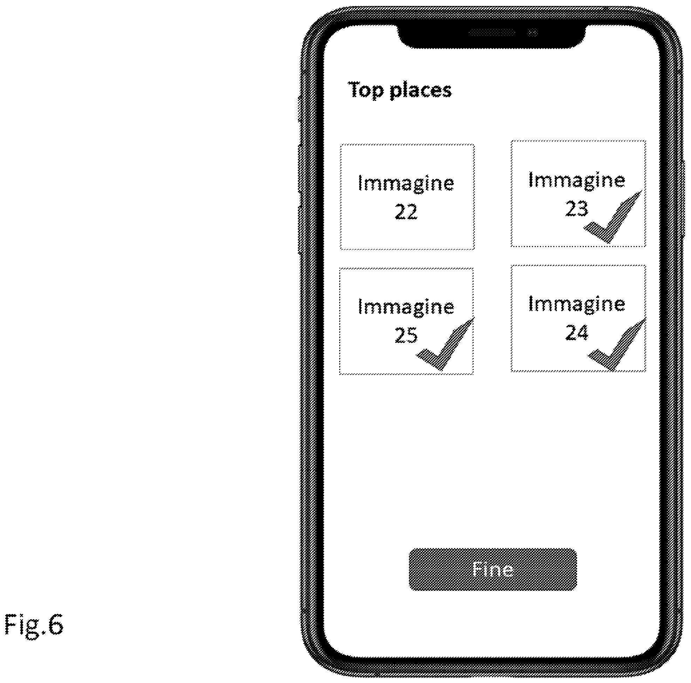

The process of the present invention, after having foreseen the presence of such apparatus 1 and databases 3 and 5, provides for a series of steps, which are presented to the user on the screen of the apparatus 1, and which have been represented in Figures 2 to 7 in their salient aspects.
After the activation, for example, of an Application (APP) that is run on device 1, a user registration is expected with the relative insertion of their personal data in the second database 5.
After registering with the app (via email and password, or via Facebook credentials), the user must select the city where the visit will be made, if not already done previously. The user will be presented with the map of the city; places will not be displayed in the user interface yet. It will present only the urban layout, and a pointer to the user's position (if he has activated geolocation on his device) without other additional elements.
The places will be identified on the map when the user enters a certain radius from the place. The user will be notified of the newly "discovered" place and a location icon (pin) will appear with a color and a symbol defined according to the specifications entered in the database 3.

In the map view, there will be an icon that will allow the user to take advantage of the "custom route calculation" feature.

Once selected, a first screen appears on the display of device 1 (Figure 2) in which the user enters location data, duration of the tourist itinerary, and other information. This entry phase is designed to filter the places to be visit within a certain radius of the user and prepare the calculation of the travel time and the visit time, taking into account the maximum duration of the itinerary.

In Figure 2, the main fields that appear to the user are:

"Tour duration": starts filtering places within a certain radius of the user and prepares the calculation on travel time and visit time. It takes into account the maximum duration, beyond which the itinerary cannot go.

"Budget": only for places with paid admission. If 0, all places that need to purchase a ticket are automatically deleted from the route calculation. If it is greater than 0, all places are taken into account; then he makes sure that the cost of the ticket is lower than the allocated budget. In the case of 2 or more "paid places" that can be included in the itinerary, the cost of X1 + X2 must be < of the budget. For example, if the budget per person is set at € 20 and the first ticket costs € 15, it is advisable to visit the place. In the event that the tourist pays the ticket, the new budget for the tour will be 20-15 = 5 and therefore only the places with price <= € 5 will be considered later.

The entry fields on the type of visit are:

"Nature and relaxation" and "Cultural visit": they are used to establish a value that can be traced back to the type of place.

"Outdoor visit" and "Indoor visit": they are used to establish a value attributable to the visit characteristic of the type of place.

The user will report these preferences via a scroll bar with values between 0 (zero) and 1 (one) .

Below is a table with the constants that identify the relationships between the user input values (rows) and the types of places (columns):

*Table 1*

|  | Architecture | Urban planning | Museum | Garden/park | Archaeological Site |
|---|---|---|---|---|---|
| Cultural visit | 0.2 | 0.15 | 0.25 | 0.05 | 0.2 |
| Nature and relaxation | 0.1 | 0.15 | 0.05 | 0.225 | 0.15 |
| Outdoor visit | 0.1 | 0.2 | 0.05 | 0.225 | 0.15 |
| Indoor visit | 0.15 | 0.05 | 0.2 | 0.05 | 0.05 |

The rules for "sculptural work" and "pictorial work" are the same as for the category "urban planning".

Each value entered by the user in the 4 fields is multiplied by the constant value of every category, indicated in Table 1. A matrix is created with partial values for every category.

In this first phase, the machine will assign a score, given by the sum of the values obtained, to each place of the corresponding typology.

An example:

*Table 2*

|  | User inputs | Architecture | Urban planning | Museum | Garden / park | Archaeological site |
|---|---|---|---|---|---|---|
| Cultural visit | **0.5** | [0.5] * [0.2] = 0.1 | [0.5] * [0.15] = 0.075 | [0.5] * [0.25] = 0.125 | [0.5] * [0.05] = 0.025 | [0.5] * [0.2] = 0.1 |
| Nature and relaxation | **0.85** | 0.085 | 0.1275 | 0.0425 | 0.19125 | 0.1275 |
| Outdoor visit | **0.5** | 0.05 | 0.1 | 0.025 | 0.1125 | 0.075 |
| Indoor visit | **0.3** | 0.045 | 0.015 | 0.06 | 0.015 | 0.015 |
| **Sum** |  | **0.28** | **0.3175** | **0.2525** | **0.34375** | **0.3175** |

The last optional entry parameter is the "panoramic view", which can be selected if the user wishes to visit places with a view of the city or the surrounding landscape. When entering data in the database 3, a "yes" or a "no" is assigned for each place whether this parameter is present or not. Only if the user selects "panoramic view", a score of 0.15 will be added only to places where a positive value has been entered for the "panoramic view".

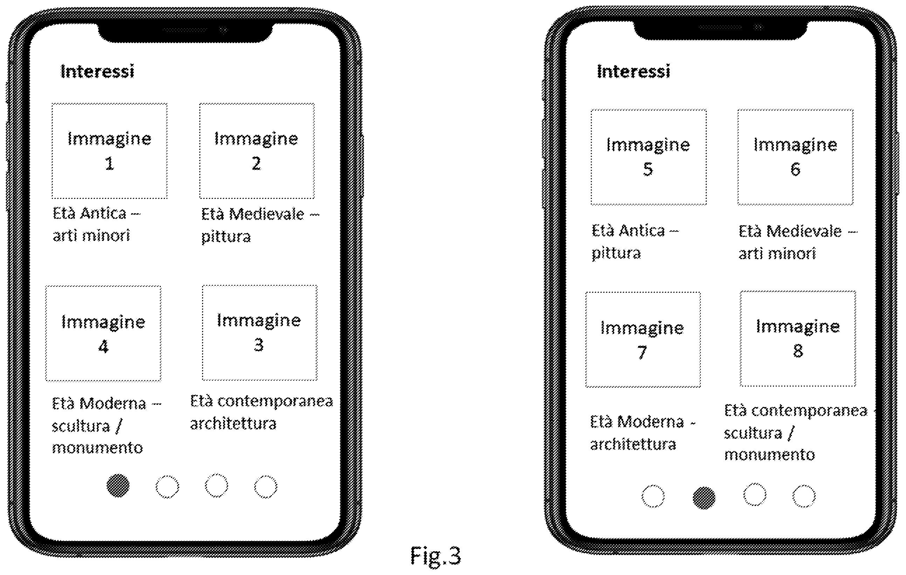

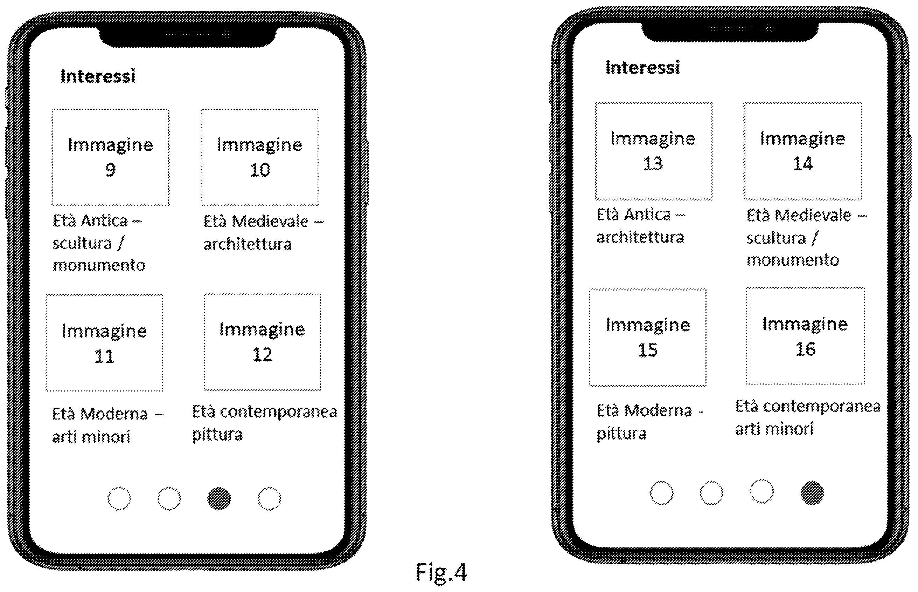

As shown in Figures 3 and 4, after this first screen, the second category of data entry concerns the assignment of historical-artistic preferences through 4 screens each consisting of 4 images. These images are representative of the 4 macro-categories present in "historical period and territorial areas" (Ancient Age, Medieval Age, Modern Age, Contemporary Age) and of 4 macro-categories present in "art form" : Sculpture/monument (including the "urban planning" category), Painting, Architecture (without the "urban planning" category), Minor Arts (including the categories: "design and engraving", "literature", "design", "music", "theater", " cinema "," photography "," documentation ").

Each image represents 1 "art form" and 1 "historical period".

Each screen contains 4 images, each with a different "art form" - "historical period" couple.

In the 4 screens it is not possible to repeat the same pair of macro-categories. This way there will be 16 different images on all screens.

The user, for each screen, will select and assign preferences by selecting the images in descending order (from best to worst) by assigning a value from 1 (best) to 4 (worst) according to the order of choice.

The value attributed to the image is weighted as follows: 1 = 1; 2 = 0.75; 3 = 0.50; 4 = 0.25.

An average of the scores assigned to each of the 4 representative images of each macro-category is calculated. The data thus collected will be used to attribute a numerical value to each of the 8 macro-categories. Here is an example:

*Table 3*

|  | Ancient Age | Medieval Age | Modern Age | Contemporary Age | Average Art form |
|---|---|---|---|---|---|
| *Minor arts* | 1 | 0.75 | 0.75 | 0.25 | **68.75** |
| *Pictorial works* | 0.50 | 0.75 | 1 | 0.25 | **62.50** |
| *Sculpures / Monuments* | 1 | 0.75 | 0.50 | 0.25 | **62.50** |
| *Architecture* | 0.50 | 0.50 | 1 | 0.25 | **56.25** |
| ***Average Historical period*** | **0.75** | **0.6875** | **0.8125** | **0.25** | |

These numerical values will be weighted with the values of the same categories for each place, attributing a "value of interest" to each category.

The values thus found will weighted by macro-category, resulting in two values: one for the "historical period" and 1 for the "form of art".

Preferably, the "value of interest" can be calculated as follows: 1.1 Info - stimuli → sum by type of the 4 categories. Architecture = cultural + nature + open/closed + panoramic; Archaeological site = (same formula); etc., the value thus obtained being attributed to all the places identified with that typology; 2. View - characterization → proportion between average user values and attributes of the place; Historical period = average (ancient of the place * average ancient user + medieval of the place * average medieval user + etc.); Form of art = same formula of the historical period, both being calculated on each place and as a result being attributed two "values of interest" for each place; 3. Values - questions → given that the detection scale is the same as the attributes of the places, the correspondence between the user's values and the values of the place is detected by attributing a proportional weight with the same formula used in section "2. View - characterization" for "historical period" and "art form", the "value of interest" for each place being the sum of each result.

Table 4 shows an example with numerical responses to a questionnaire and two typical places:

*Table* 4

**Place 1**

|  |  | Questionnaire | Database 3 | Values of interest | Average |
|---|---|---|---|---|---|
| Historical Period | Ancient Age | *0.75* | *0* | 0 | **0.1680** |
| | Medieval Age | *0.6875* | *0* | 0 | |
| | Modern Age | *0.8125* | *0.75* | 0.6094 | |
| | Contemporary Age | *0.25* | *0.25* | 0.0625 | |
| Art forms | Minor arts | *0.6875* | *0* | 0 | **0.1445** |
| | Pictorial works | *0.6250* | *0* | 0 | |
| | Sculptures / monuments | *0.6250* | *0.25* | 0.1563 | |
| | Architecture | *0.5625* | *0.75* | 0.4219 | |

(continued)

**Place 2**

| | | Questionnaire | Database 3 | Values of Interest | Average |
|---|---|---|---|---|---|
| Historical Period | Ancient Age | 0.75 | 0.10 | 0.075 | |
| | Medieval Age | 0.6875 | 0 | 0 | |
| | Modern Age | 0.8125 | 0.60 | 0.4875 | **0.1594** |
| | Contemporary Age | 0.25 | 0.30 | 0.075 | |
| Art forms | Minor Arts | 0.6875 | 0.10 | 0.0688 | |
| | Pictorial works | 0.6250 | 0.15 | 0.0938 | |
| | Sculptures / monuments | 0.6250 | 0.35 | 0.2188 | **0.1656** |
| | Architecture | 0.5625 | 0.50 | 0.2813 | |

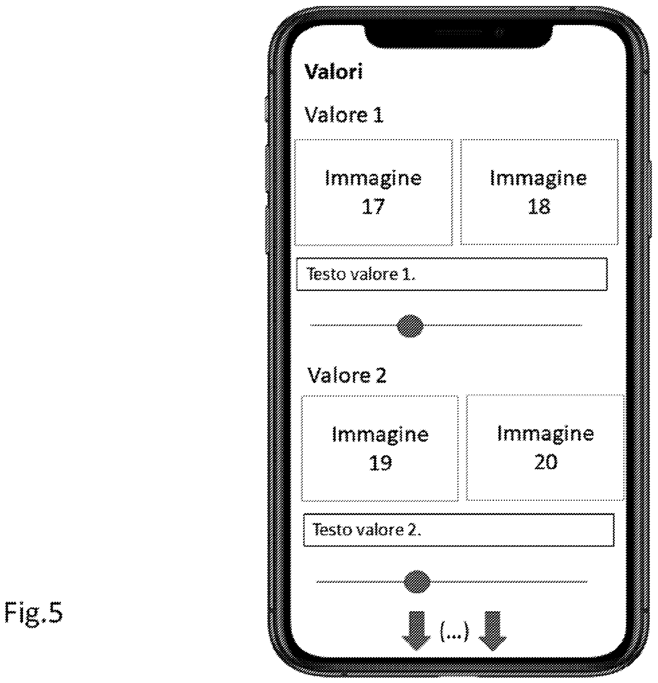

In the next step, illustrated in Figure 5, the user will indicate their interests regarding the meaning of the work, the reasons for its creation and the interpretation of the subjects represented.

The user views three photos for each value with an example text box for each and a scroll bar for entering the score.

In this phase, the user is asked to assign scores from 0 to 1 to 6 categories of "values". These values are the same as those entered in the database 3, with the exception of the "functional" value which will not be taken into consideration in this procedure.

The scores entered by the user will be proportioned with the corresponding "value" (percentage, from database 3). An overall score will be assigned for the "values" macro-category resulting from the average of the weights of each value (similar procedure for calculating the score of the "art form" and the "historical period").

In Table 5 an example:

*Table 5*

**Place 1**

| | | Questionnaire | Database 3 | Values of interest | |
|---|---|---|---|---|---|
| Values | Celebratory | 0.50 | 0.50 | **0.25** | |
| | Personal | 0.65 | 0 | **0** | |
| | Sacred | 0.80 | 0 | **0** | **0.1000** |
| | Social | 0.55 | 0 | **0** | |
| | Symbolic | 0.70 | 0.50 | **0.35** | |
| | Political | 0.25 | 0 | **0** | |

**Place 2**

| | | Questionnaire | Database 3 | Values of interest | |
|---|---|---|---|---|---|
| Values | Celebratory | 0.50 | 0 | **0** | |
| | Personal | 0.65 | 0 | **0** | |
| | Sacred | 0.80 | 0 | **0** | **0.1046** |
| | Social | 0.55 | 0.25 | **0.14** | |
| | Symbolic | 0.70 | 0.70 | **0.49** | |
| | Political | 0.25 | 0 | **0** | |

At the end of the process, the machine collects and analyzes all the inputs entered by the user (Database 5) and assigns a value to each place on the map.

This value is the sum of the values obtained at each step of the questionnaire.

For the answers to the questionnaire on the historical period and on the form of art, those of the example in Table 2 are used.

For the answers to the questionnaire on values, those of the example in Table 3 are used.

The weighted values between the answers to the questionnaire and the percentage values of the database 3 for 4 real places were calculated below:

***Tabella 2***

|  | 1. Type | Panoramic view - YES/NO | 2.1 Historical period | 2.2 Art Form | 3. Values | **Value Of Interest** |
|---|---|---|---|---|---|---|
| Palazzo 1 | 0.28 | 0.00 | 0.2031 | 0.1469 | 0.0867 | **0.717** |
| Chiesa 2 | 0.28 | 0.00 | 0.161 | 0.1484 | 0.0946 | **0.684** |
| Piazza 3 | 0.3175 | 0.00 | 0.1703 | 0.1453 | 0.0767 | **0.710** |
| Giardino 4 | 0.34375 | 0.15 | 0.0625 | 0.1437 | 0.085 | **0.785** |

For "1. Type" the result is obtained from the type:

- 

```
Palace 1 and Church 2 = Architecture = 0.28;
```

- 

```
Square 3 = Urban planning = 0.3175;
```

- 

```
Garden 4 = Park = 0.34375.
```

The panoramic view is "YES" so a value will be assigned to those places with a view (Garden 4).

***Table 3***

|  | Ancient Age | Medieval Age | Modern Age | Contemporary Age | **Value Of Interest** |
|---|---|---|---|---|---|
| Palace 1 | 0 | 0 | 1 | 0 | **0.2031** |
| Church 2 | 0 | 0 | 0.70 | 0.30 | **0.161** |
| Square 3 | 0.10 | 0.10 | 0.80 | 0.20 | **0.1703** |
| Garden 4 | 0 | 0 | 0 | 1 | **0.0625** |
| Palace 1 = (1 * 0.8125) / 4; Church 2 = (0.7 * 0.8125 + 0.3 * 0.25) / 4; Square 3 = (0.1 * 0.75 + 0.1 * 0.6875 + 0.6 * 0.8125 + 0.2 * 0.25) / 4; Garden 4 = (1 * 0.25) / 4. | | | | | |

***Table 4***

|  | Minor Arts | Pictural Works | Sculptures / Monuments | Architecture | **Value of Interest** |
|---|---|---|---|---|---|
| Palazzo 1 | 0 | 0.30 | 0.10 | 0.60 | **0.1469** |
| Chiesa 2 | 0.10 | 0.15 | 0.15 | 0.60 | **0.1484** |
| Piazza 3 | 0 | 0 | 0.30 | 0.70 | **0.1453** |
| Giardino 4 | 0 | 0 | 0.20 | 0.80 | **0.1437** |
| Palace 1 = (0.3 * 0.6250 + 0.1 * 0.6250 + 0.6 * 0.5625) / 4; Church 2 = (0.1 * 0.6875 + 0.15 * 0.625 + 0.15 * 0.625 + 0.6 * 0.5625) / 4; Square 3 = (0.3 * 0.625 + 0.7 * 0.5625) / 4; Garden 4 = (0.2 * 0.625 + 0.8 * 0.5625) / 4. | | | | | |

For the "values" the computation is very similar to that for the "historical period" and the "form of art".
Herein below an example with the same places and hypothetical replies to the al questionnaire:

*Table 5*

|  | Celebratory | Personal | Sacred | Social | Symbolic | Political | **Value of interest** |
|---|---|---|---|---|---|---|---|
| **Questionnaire** | **0.50** | **0.65** | **0.80** | **0.55** | **0.70** | **0.25** | |
| Palazzo 1 | 0 | 0.20 | 0 | 0.30 | 0.25 | 0.20 | **0.0867** |
| Chiesa 2 | 0 | 0 | 0.30 | 0.25 | 0.20 | 0.20 | **0.0946** |
| Piazza 3 | 0.20 | 0 | 0 | 0.35 | 0.15 | 0.25 | **0.0767** |
| Giardino 4 | 0.15 | 0.10 | 0 | 0.65 | 0 | 0.05 | **0.085** |

Palace 1 = (0.2 * 0.65 + 0.3 * 0.55 + 0.25 * 0.7 + 0.2 * 0.25) / 6; Church 2 = (0.3 * 0.8 + 0.25 * 0.55 + 0.2 * 0.7 + 0.2 * 0.25) / 6; Square 3 = (0.2 * 0.5 + 0.35 * 0.55 + 0.15 * 0.7 + 0.25 * 0.25) / 6; Garden 4 = (0.15 * 0.5 + 0.1 * 0.65 + 0.65 * 0.55 + 0.05 * 0.25) / 6.

The score of interest attributed to each place is the sum of the weighted values of the macro-categories.

Taking up the results of Table 6, they are listed in descending order:

1. Garden 4 = 0.785
2. Palace 1 = 0.717
3. Square 3 = 0.710
4. Church 2 = 0.684

This will give priority to places with a higher level of interest.

The calculation of the route will also take into consideration the travel time and an estimated time of visit for each place, while the places that do not fall within the specified budget will be filtered.

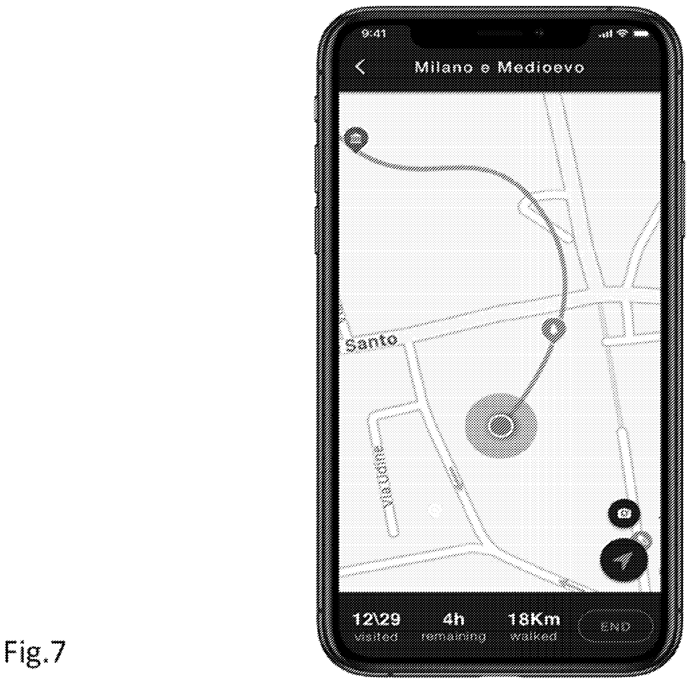

In the last screen, Figure 7, the map will be shown with the places identified and those selected by the user, the route that the user will follow, and other information such as the real duration of the tour and the portion of the budget that can be spent.

The user can choose between two or more tours with the ability to change the itinerary before approval.

At the end of the route, the tour will be saved with the itinerary followed, the places visited and the contents associated with them.

An apparatus 1 is also provided for organizing flexible and customized tourist itineraries: this apparatus 1 comprises computer-readable instructions which, when executed, carry out the procedure as described above.

For this purpose, this apparatus 1 is equipped at least with display means (not illustrated) to present the above-mentioned screens to the user, with processing means (not illustrated) for processing the algorithms described above, with storage means (not illustrated) to memorize the application programs described above, and of power supply means for powering all the components of the apparatus 1 itself.

Some preferred embodiments of the present invention have been illustrated and described above: obviously, numerous variants and modifications, functionally equivalent to the previous ones, which fall within the scope of the invention as highlighted in the attached claims, will be immediately apparent to those skilled in the art.

**Claims**

1.    Process for organizing flexible and customized tourist itineraries, including the steps of:

- providing an apparatus (1) for processing and management;
- providing a first database (3) containing geographic and tourist data of places of interest, operationally connected to said apparatus (1);
- providing a second database (5) containing user data, operationally connected to said apparatus (1);
- registering a user by entering related personal data in said second database (5);
- entering location data and duration of the tourist itinerary, said insertion phase being designed to filter the places to visit within a certain radius of the user and prepare the calculation on the travel time and the visit time, taking into account the maximum duration of the itinerary;
- entering data relating to stimuli and type of itinerary, said data being related to nature and relaxation; cultural visit; outdoor visit; visit indoors; and/or panoramic visit;
**characterized in that**, in said step of entering data relating to stimuli and type of itinerary, said data are weighted with a value from 0 to 1 with respect to the qualifications of the itinerary in the form of architecture; urban planning and pictorial and sculptural work; museum; park and garden; and/or archaeological site, said stimuli and type data and said qualification data being linked together by a Table of rules, each data entered by the user being multiplied by the constant value of every category, indicated in the Table of rules, a matrix being created with partial values for every category;
and **in that** it further comprises the steps of:

- displaying to the user a plurality of sections, preferably at least 4 sections, with a plurality, preferably at least 4, of images each, each section + image representing the following two themes: the first is one of the 4 historical periods, ancient age, medieval, modern and contemporary, the second expresses the form of art among the 4 most representative categories and grouped according to similarities, minor arts, painting, sculpture and architecture, each image for each of the 4 sections representing a historical period and a form of art, in pairs without the same pair being repeated, the user indicating his preferences by ranking from 1 (the best) to 4 (the worst) on each image for each section, a score being attributed for each image in this way:

$$1 = 1; \quad 2 = 0.75; \quad 3 = 0.50; \quad 4 = 0.25;$$

- displaying to the user at least one photo for each value and a text box, where some questions will be inserted to help the user understand what the values represented refer to and give an idea of what the topics covered in the contents will be, the user by entering a score expressed in numerical value from 0 to 1 for each of the categories, Celebratory, Personal, Sacred, Social, Symbolic, Political, a seventh category being represented as a drop-down menu with artists to be selected;
- processing the preferences entered by the user, resulting in a value of interest on each mapped place; and
- computing the reported preferences resulting in a "value of interest" on each mapped place and present an itinerary with the number of places to visit, visit time and distance to be traveled.

wherein said Table of rules is as follows:

| | Architecture | Urban planning | Museum | Garden/park | Archaeological Site |
|---|---|---|---|---|---|
| Cultural visit | 0.2 | 0.15 | 0.25 | 0.05 | 0.2 |
| Nature and relaxation | 0.1 | 0.15 | 0.05 | 0.225 | 0.15 |
| Outdoor visit | 0.1 | 0.2 | 0.05 | 0.225 | 0.15 |
| Indoor visit | 0.15 | 0.05 | 0.2 | 0.05 | 0.05 |

wherein the "value of interest" is calculated as follows: 1.1 Info - stimuli → sum by type of the 4 categories. Architecture = cultural + nature + open/closed + panoramic; Archaeological site = (same formula); etc., the value thus obtained being attributed to all the places identified with that typology; 2. View - characterization → proportion between average user values and attributes of the place; Historical period = average (ancient of the place * average ancient user + medieval of the place * average medieval user + etc.); Form of art = same formula of the historical period, both being calculated on each place and as a result being attributed two "values of interest" for each place; 3. Values - questions → given that the detection scale is the same as the attributes of the places, the correspondence between the user's values and the values of the place is detected by attributing a proportional weight with the same formula used in section "2. View - characterization" for "historical period" and "art form", the "value of interest" for each place being the sum of each result.

2. Process according to Claim 1, further comprising the step of entering budget data relating to places with paid entry, said step being designed to include or exclude from the itinerary the places, which respectively fall within or outside the budget estimated by the user.

3. Apparatus (1) for organizing flexible and customized tourist itineraries, **characterized in that** it comprises computer-readable instructions which, when executed, carry out the process according to any one of the preceding claims.

**Patentansprüche**

1. Verfahren zur Organisation flexibler und personalisierter touristischer Reiserouten, einschließlich der folgenden Phasen:

   - Bereitstellung einer Verarbeitungs- und Verwaltungsvorrichtung (1);
   - Bereitstellung einer Ausgangsdatenbank (3) mit geografischen und touristischen Daten zu Sehenswürdigkeiten, die betrieblich mit dem Gerät (1) verbunden ist;
   - Bereitstellen einer zweiten Datenbank (5) mit Benutzerdaten, die betriebsmäßig mit dem Gerät (1) verbunden ist;
   - einen Benutzer durch Eingabe seiner persönlichen Daten in die zweite Datenbank (5) registrieren;
   - Daten zum Ort und zur Dauer der touristischen Reiseroute eingeben, wobei diese Eingabephase dazu dient, die zu besuchenden Orte in einem bestimmten Umkreis vom Benutzer herauszufiltern und die Berechnung der Reisezeit und der Besuchszeit unter Berücksichtigung der maximalen Dauer der Reiseroute vorzubereiten;
   - Daten zu Reizen und Art der Reiseroute eingeben, wobei diese Daten mit Natur und Entspannung in Zusammenhang stehen; kultureller Besuch; Besuch im Freien; Innenbesuch; und/oder Panoramabesuch; **dadurch gekennzeichnet, dass** in der Phase der Dateneinfügung bezüglich der Reize und der Art der Reiseroute die Daten hinsichtlich der Qualifikationen der Reiseroute in Form der Architektur mit einem Wert von 0 bis 1 gewichtet werden; Städtebauliche und bildhauerische Arbeiten; Museum; Park und Garten; und/oder archäologische Stätte, wobei die Stimulus- und Typdaten und die Qualifikationsdaten durch eine Regeltabelle miteinander verknüpft sind, wobei alle vom Benutzer eingegebenen Daten mit dem konstanten Wert jeder Kategorie multipliziert werden, der in der Regeltabelle angegeben ist, und für jede Kategorie eine Matrix mit Teilwerten erstellt wird;
   und aus der Tatsache, dass es auch die folgenden Phasen umfasst:

   - dem Benutzer mehrere Abschnitte, vorzugsweise mindestens 4 Abschnitte, mit jeweils mehreren, vorzugsweise mindestens 4 Bildern anzeigen, wobei jeder Abschnitt + Bild die folgenden zwei Themen darstellt: Das erste ist eine der 4 historischen Epochen (Antike, Mittelalter, Neuzeit und Gegenwart), das zweite drückt die Kunstform unter den 4 repräsentativsten Kategorien aus und ist nach Ähnlichkeiten gruppiert (kleine Künste, Malerei, Bildhauerei und Architektur), wobei jedes Bild für jeden der 4 Abschnitte eine historische Epoche und eine Kunstform darstellt, paarweise, ohne dass dasselbe Paar wiederholt wird, wobei der Benutzer seine Präferenzen durch Klassifizierung von 1 (das beste) bis 4 (das schlechteste) für jedes Bild für jeden Abschnitt angibt, wobei jedem Bild auf diese Weise eine Punktzahl zugewiesen wird:

   $$1 = 1; \ 2 = 0,75; \ 3 = 0,50; \ 4 = 0,25;$$

   - dem Benutzer mindestens ein Foto für jeden Wert und ein Textfeld anzeigen, in das einige Fragen eingefügt werden, um dem Benutzer zu helfen, zu verstehen, worauf sich die dargestellten Werte beziehen, und um eine Vorstellung davon zu geben, welche Themen in den Inhalten behandelt werden. Der Benutzer gibt für jede der Kategorien (Festlich, Persönlich, Heilig, Sozial, Symbolisch, Politisch) eine Bewertung ein, die als numerischer Wert von 0 bis 1 ausgedrückt wird. Eine siebte Kategorie wird als Dropdown-Menü mit Künstlern zur Auswahl dargestellt;
   - die vom Benutzer eingegebenen Präferenzen verarbeiten, wodurch sich für jeden kartierten Standort ein Interessenwert ergibt; und
   - Berechnen Sie die gemeldeten Präferenzen, wodurch sich für jeden kartierten Ort ein "Interessewert" ergibt, und präsentieren Sie eine Reiseroute mit der Anzahl der zu besuchenden Orte, der Besuchszeit und der Reiseentfernung.

   wobei die Regeltabelle wie folgt lautet:

| | Architektur | Stadtplanung | Museum | Garten/Park | Archäologische Stätte |
|---|---|---|---|---|---|
| *Kultureller Besuch* | 0, 2 | 0,15 | 0,25 | 0,05 | 0, 2 |
| *Natur und Entspannung* | 0,1 | 0,15 | 0,05 | 0,225 | 0,15 |
| *Externer Besuch* | 0,1 | 0,2 | 0,05 | 0,225 | 0,15 |
| *Interner Besuch* | 0,15 | 0, 05 | 0,2 | 0,05 | 0, 05 |

wobei der Wert des "Interesses" wie folgt berechnet wird: 1.1 Info - Reize → Summe nach Typologie der 4 Kategorien. Architektur = Kultur + Natur + offen/geschlossen + Panorama; Archäologische Stätte = (dieselbe Formel); usw., wobei der so ermittelte Wert allen Orten zugeschrieben wird, die mit dieser Typologie identifiziert wurden; 2. Ansicht - Charakterisierung → Verhältnis zwischen durchschnittlichen Benutzerwerten und Ortsattributen; Historischer Zeitraum = Durchschnitt (Antike des Ortes * durchschnittliche antike Nutzung + mittelalterliche des Ortes * durchschnittliche mittelalterliche Nutzung + usw.); Kunstform = gleiche Formel wie die historische Periode, beide werden an jedem Ort berechnet und daher werden jedem Ort zwei "Zinswerte" zugeschrieben; 3. Werte - Fragen → da die Erkennungsskala dieselbe ist wie die Ortsattribute, wird die Übereinstimmung zwischen den Werten des Benutzers und den Ortswerten erkannt, indem eine proportionale Gewichtung mit derselben Formel zugewiesen wird, die im Abschnitt "2. Ansicht - Charakterisierung" für "historische Periode" und "Kunstform" verwendet wird, wobei der "Wert von Interesse" für jeden Ort die Summe aller Ergebnisse ist.

2. Verfahren nach Anspruch 1, das außerdem den Schritt der Eingabe von Budgetdaten zu Orten mit bezahltem Eintritt umfasst, wobei dieser Schritt dazu dient, Orte in die Reiseroute aufzunehmen oder davon auszuschließen, die innerhalb bzw. außerhalb des vom Benutzer geschätzten Budgets liegen.

3. Gerät (1) zum Organisieren flexibler und personalisierter Touristenrouten, **dadurch gekennzeichnet, dass** es computerlesbare Anweisungen enthält, die bei Ausführung das Verfahren gemäß einem der vorhergehenden Ansprüche durchführen.

**Revendications**

1. Procédure d'organisation d'itinéraires touristiques flexibles et personnalisés, comprenant les phases de:

- fournir un appareil de traitement et de gestion (1);
- prévoir une base de données initiale (3) contenant des données géographiques et touristiques de lieux d'intérêt, connectée opérationnellement audit appareil (1);
- fournir une deuxième base de données (5) contenant des données utilisateur, connectée opérationnellement audit dispositif (1);
- enregistrer un utilisateur en saisissant ses données personnelles dans la deuxième base de données (5);
- saisir des données sur la localisation et la durée de l'itinéraire touristique, cette phase de saisie étant destinée à filtrer les lieux à visiter dans un certain rayon autour de l'utilisateur et à préparer le calcul du temps de trajet et du temps de visite, en tenant compte de la durée maximale de l'itinéraire;
- saisir des données relatives aux stimuli et au type d'itinéraire, lesdites données étant relatives à la nature et à la détente; visite culturelle; visite en plein air; visite intérieure; et/ou visite panoramique;

**caractérisé par le fait que**, dans ladite phase d'insertion de données relatives aux stimuli et au type d'itinéraire, lesdites données sont pondérées avec une valeur de 0 à 1 par rapport aux qualifications de l'itinéraire sous forme d'architecture; urbanisme et travail pictural et sculptural; musée; parc et jardin; et/ou site archéologique, lesdites données de stimulus et de type et lesdites données de qualification étant liées entre elles par un tableau de règles, chaque donnée saisie par l'utilisateur étant multipliée par la valeur constante de chaque catégorie, indiquée dans le tableau de règles, une matrice à valeurs partielles étant créée pour chaque catégorie; et du fait qu'il comprend également les phases de:

- afficher à l'utilisateur une pluralité de sections, de préférence au moins 4 sections, avec une pluralité, de préférence au moins 4, d'images chacune, chaque section + image représentant les deux thèmes suivants: la première est l'une des 4 périodes historiques, antique, médiévale, moderne et contemporaine, la seconde exprime la forme d'art parmi les 4 catégories les plus représentatives et regroupées selon les similitudes, arts mineurs, peinture, sculpture et architecture, chaque image pour chacune des 4 sections représentant une période historique et une forme d'art, par paires sans que la même paire soit répétée, l'utilisateur indiquant ses préférences par classement de 1 (la meilleure) à 4 (la pire) sur chaque image pour chaque section, une note étant attribuée pour chaque image de cette manière:

$$1 = 1; 2 = 0,75; 3 = 0,50; 4 = 0,25;$$

- afficher à l'utilisateur au moins une photo pour chaque valeur et une zone de texte, où seront insérées quelques questions pour aider l'utilisateur à comprendre à quoi font référence les valeurs représentées et pour donner une idée de ce que seront les thèmes abordés dans le contenu, l'utilisateur insérant un score exprimé dans une valeur numérique de 0 à 1 pour chacune des catégories, Célébratoire, Personnelle, Sacrée, Sociale, Symbolique, Politique, une septième catégorie étant représentée sous forme de menu déroulant avec des artistes à sélectionner;

- traiter les préférences saisies par l'utilisateur, ce qui donne lieu à une valeur d'intérêt pour chaque emplacement cartographié; et

- calculer les préférences déclarées résultant en une «valeur d'intérêt» sur chaque lieu cartographié et présenter un itinéraire avec le nombre de lieux à visiter, le temps de visite et la distance à parcourir;

dans lequel ledit tableau des règles est le suivant:

|  | Architecture | Urbanisme | Musée | Jardin/parc | Site archéologique |
|---|---|---|---|---|---|
| Visite culturelle | 0,2 | 0,15 | 0,25 | 0,05 | 0,2 |
| Nature et détente | 0,1 | 0,15 | 0,05 | 0,225 | 0,15 |
| Visite extérieure | 0,1 | 0,2 | 0,05 | 0,225 | 0,15 |
| Visite interne | 0,15 | 0,05 | 0,2 | 0,05 | 0,05 |

où la «valeur d'intérêt» est calculée comme suit: 1.1 Info - stimuli → somme par typologie des 4 catégories. Architecture = culturel + nature + ouvert/fermé + panoramique ; Site archéologique = (même formule); etc., la valeur ainsi obtenue étant attribuée à tous les lieux identifiés à cette typologie; 2. Vue - caractérisation → proportion entre les valeurs moyennes des utilisateurs et les attributs du lieu; Période historique = moyenne (ancien du lieu * utilisateur antique moyen + médiéval du lieu * utilisateur médiéval moyen + etc.); Forme d'art = même formule que la période historique, les deux étant calculées sur chaque lieu et par conséquent deux «valeurs d'intérêt» étant attribuées à chaque lieu; 3. Valeurs - questions → puisque l'échelle de détection est la même que les attributs de lieu, la correspondance entre les valeurs de l'utilisateur et les valeurs de lieu est détectée en attribuant un poids proportionnel avec la même formule utilisée dans la section «2. Vue - caractérisation» pour «période historique» et «forme d'art», la «valeur d'intérêt» pour chaque lieu étant la somme de chaque résultat.

2. Procédé selon la revendication 1, comprenant en outre l'étape de saisie de données budgétaires relatives à des lieux à entrée payante, ladite étape étant conçue pour inclure ou exclure de l'itinéraire des lieux qui se situent respectivement dans ou hors du budget estimé par l'utilisateur.

3. Appareil (1) pour organiser des itinéraires touristiques flexibles et personnalisés, **caractérisé en ce qu'**il comprend des instructions lisibles par ordinateur qui, lorsqu'elles sont exécutées, exécutent la procédure selon l'une quelconque des revendications précédentes.

Fig. 1

Fig.2

**Interessi**

| Immagine 1 | Immagine 2 |
|---|---|
| Età Antica – arti minori | Età Medievale – pittura |
| Immagine 4 | Immagine 3 |
| Età Moderna – scultura / monumento | Età contemporanea architettura |

**Interessi**

| Immagine 5 | Immagine 6 |
|---|---|
| Età Antica – pittura | Età Medievale – arti minori |
| Immagine 7 | Immagine 8 |
| Età Moderna - architettura | Età contemporanea scultura / monumento |

Fig.3

EP 4 211 628 B1

EP 4 211 628 B1

**Interessi**

| | |
|---|---|
| Immagine 9 | Immagine 10 |
| Età Antica – scultura / monumento | Età Medievale – architettura |
| Immagine 11 | Immagine 12 |
| Età Moderna – arti minori | Età contemporanea pittura |

**Interessi**

| | |
|---|---|
| Immagine 13 | Immagine 14 |
| Età Antica – architettura | Età Medievale – scultura / monumento |
| Immagine 15 | Immagine 16 |
| Età Moderna - pittura | Età contemporanea arti minori |

Fig.4

Fig.5

Top places

Immagine 22

Immagine 23 ✓

Immagine 25 ✓

Immagine 24 ✓

Fine

Fig.6

Fig.7

**EP 4 211 628 B1**

**REFERENCES CITED IN THE DESCRIPTION**

**Patent documents cited in the description**

- US 2007185744 A1
- US 7212983 B2